# EUROPÄISCHE PATENTSCHRIFT

(11) **EP 0 711 989 B1**
(45) Veröffentlichungstag und Bekanntmachung des Hinweises auf die Patenterteilung: **14.04.1999**
(21) Anmeldenummer: 94117627.3
(22) Anmeldetag: 08.11.1994
(51) Int. Cl.: G01M 15/00

(54) **Verfahren zur Erkennung von Kurbelwellenoszillationen**
Procedure for detecting crankshaft oscillations
Procédé de détection des oscillations du villebrequin

(43) Veröffentlichungstag der Anmeldung: 15.05.1996
(73) Patentinhaber: SIEMENS AKTIENGESELLSCHAFT, 80333 München (DE)
(72) Erfinder: Angermaier, Anton, D-84034 Landshut (DE)

(56) Entgegenhaltungen:
- US-A- 5 287 737
- PATENT ABSTRACTS OF JAPAN vol. 17 no. 457 (P-1597) ,20.August 1993 & JP-A-05 107155 (NISSAN MOTOR CO LTD) 27.April 1993,

## Beschreibung

Die Erfindung betrifft ein Verfahren zur Erkennung von Kurbelwellenoszillationen. Solche Oszillationen können bei einer Brennkraftmaschine insbesondere im Bereich niederer Drehzahlen durch Verbrennungsaussetzer, Gaßstöße oder Straßenunebenheiten verursacht werden. Treten solche Oszillationen auf, so werden übliche Verfahren zur Erkennung von Verbrennungsaussetzern, bei denen Änderungen in der Umdrehungsgeschwindigkeit der Kurbelwelle ausgewertet werden, gerade im Bereich niederer Drehzahlen stark gestört, so daß eine sichere Verbrennungsaussetzererkennung nicht mehr möglich ist.

Aus der JP-A-05107155 ist eine Vorrichtung zur Verbrennungsaussetzererkennung bei einer Brennkraftmaschine bekannt, bei der die Amplitude und die Frequenz zur Unterscheidung von Fehlverbrennungen und von Schwingungen, die auftreten, wenn das Kraftfahrzeug über eine unebene Straße fährt, verwendet werden. Das Verfahren zur Verbrennungsaussetzererkennung wird gestoppt, wenn die Fluktuationsperiode der Umdrehungsgeschwindigkeit innerhalb eines vorgegebenen Frequenzbereiches für eine bestimmte Zeitdauer liegt.

Der Erfindung liegt daher die Aufgabe zugrunde, ein Verfahren zur Erkennung dieser Kurbelwellenoszillationen anzugeben, so daß in den Bereichen, in denen solche Oszillationen erkannt werden, die Verbrennungsaussetzererkennung unterdrückt wird.

Die Erkennung dieser Kurbelwellenoszillationen erfolgt über die Amplitude und die Frequenz der Schwingungen. Zur Begriffsdefinition sei gesagt: Mit Kurbelwellenoszillation wird das störende Schwingen der Kurbelwelle durch Resonanzerscheinungen bezeichnet; der Begriff Kurbelwellenschwingung wird als Oberbegriff verwendet, der sowohl die Oszillation bezeichnet als auch die Schwankungen der Kurbelwellengeschwindigkeit durch Verbrennungsaussetzer. Die durch die Kurbelwellenoszillation verursachten Schwankungen der Winkelgeschwindigkeit der Kurbelwelle weisen eine wesentlich höhere Amplitude auf, als die Schwankungen der Winkelgeschwindigkeit, die durch Verbrennungsaussetzer verursacht werden. Außerdem liegen die Kurbelwellenoszillationen in einem ganz bestimmten Frequenzband, das sich von den Frequenzen der Schwankungen der Kurbelwellengeschindigkeit, die durch Verbrennungsaussetzer hervorgerufen werden, unterscheidet. Wenn Kurbelwellenschwingungen mit dieser charakteristischen Amplitude und Frequenz erkannt werden, so wird auf eine Kurbelwellenoszillation erkannt und nicht auf eine Unregelmäßigkeit der Kurbelwellengeschwindigkeit, die von Verbrennungsaussetzern herstammt. In so einem Fall wird die Erkennung auf Verbrennungsaussetzer für eine bestimmte Zeit unterdrückt. Danach wird eine erneute Überprüfung vorgenommen, ob immer noch Kurbelwellenoszillationen vorliegen. Wenn keine Kurbelwellenoszillationen mehr festgestellt werden, wird die Verbrennungsaussetzererkennung wieder zugelassen.

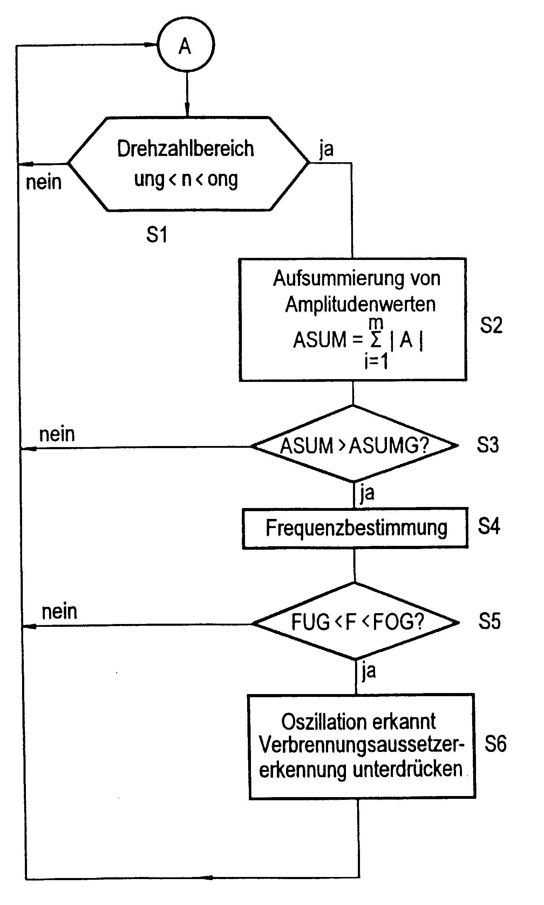

Das Verfahren wird im einzelnen anhand der Zeichnung, die den prinzipiellen Verfahrensablauf zeigt, noch näher erläutert.

Im Verfahrensschritt S1 wird überprüft, ob die aktuelle Motordrehzahl n kleiner als eine vorgegebene obere Grenzdrehzahl ong und größer als eine untere vorgegebene Drehzahl ung ist. Als bevorzugte Werte für ung wird eine Drehzahl von 800 U/min gewählt und als bevorzugter Wert für ong wird eine Drehzahl von 1800 U/min gewählt. Der Drehzahlbereich ist abhängig von der verwendeten Brennkraftmaschine. Liegt die aktuelle Motordrehzahl außerhalb dieses eingegrenzten Bereichs, wird zum Verfahrensanfang A zurückgegangen, wo nach einem vorgebbaren Zeitintervall erneut das Verfahren zur Überprüfung von Kurbelwellenoszillationen gestartet wird.

Liegt die aktuelle Motordrehzahl n innerhalb dieses eingegrenzten Bereichs, wird im Verfahrensschritt S2 die Amplitude der Kurbelwellenschwingung festgestellt. Die Schwankungen der Kurbelwellengeschwindigkeit werden dadurch festgestellt, daß man die Zeiten mißt, in der festgelegte Winkelbereiche der Kurbelwelle (Segmente), an einem auf diese Segementmarkierungen ansprechenden Sensor vorbeilaufen. Ein solches Verfahren ist beispielsweise in der EP-OS 0 576 705 derselben Anmelderin beschrieben. Da es sich bei den Schwingungen der Kurbelwelle um einen dynamischen Prozeß handelt, der vielfältigen Einfluß- und Störgrößen unterworfen ist, wird nicht bloß eine einzelne Amplitude der Kurbelwellenschwingung zur Auswertung herangezogen, sondern es werden die Amplituden über einen Meßbereich, der mehrere Kurbelwellensegmente umfaßt, erfaßt. Es werden dazu die Beträge entweder nur der positiven oder nur der negativen Schwingungsamplituden A über m Segmente aufsummiert (ASUM).

Im Verfahrensschritt S3 wird dann die so gebildete Amplitudensumme ASUM mit einem vorgegebenen Grenzwert ASUMG verglichen. Ist die Summe ASUM kleiner oder gleich dem Grenzwert ASUMG, so wird nicht auf eine Kurbelwellenoszillation geschlossen und wieder zum Verfahrensanfang A zurückgekehrt. Ist aber die Amplitudensumme ASUM größer als der Amplitudensummengrenzwert ASUMG, so wird dies als erstes Indiz für das Vorliegen von Kurbelwellenoszillationen gewertet und weiter zum Verfahrensschritt S4 verzweigt. Als Amplitudengrenzwert wird vorteilhafterweise ein Vielfaches des Laufunruhegrenzwertes verwendet, der bei den oben erwähnten Verfahren zur Erkennung von Verbrennungsaussetzern, die auf dem Prinzip der Laufunruhemessung, das heißt, auf dem Prinzip der Auswertung der Schwankungen der Kurbelwellengeschwindigkeit beruhen, verwendet wird. Der Laufunruhegrenzwert ist der gegebenenfalls modifizierte Amplitudenwert der Kurbelwellenschwingung, bei dessen Überschreiten ein Verbrennungsaussetzer festgestellt wird. Mit diesem so berechneten Amplitudengrenzwert ist garantiert, daß auf eine Oszillation der Kurbelwellenbewegung nur dann geschlossen wird, wenn die Amplituden der Schwingung wirklich größer sind als die Schwingungsamplituden, wie sie durch Verbrennungsaussetzer verursacht werden.

Im Verfahrensschritt S4 wird nun die Frequenz der Kurbelwellenschwingung ermittelt. Dazu wird über einen Meßbereich der mehrere Kurbelwellensegmente umfaßt, beispielsweise 4 Kurbelwellensegmente, anhand einer Kontrolle der Schwingungsamplitude, die Zahl der Umkehrpunkte der Amplitude (Maxima, Minima) der Schwingung festgestellt. Aus dieser Zahl und der Dauer des Meßintervalls läßt sich dann die Frequenz feststellen.

Im Verfahrensschritt S5 wird dann überprüft, ob sich die ermittelte Frequenz innerhalb eines bestimmten Bereichs befindet, d.h. ob die Frequenz F größer als ein unterer Grenzwert FUG und kleiner als ein oberer Grenzwert FOG ist. Liegt die Frequenz nicht innerhalb dieses Frequenzbereiches, dann wird wieder zum Verfahrensanfang A zurückgekehrt. Liegt die Frequenz aber im oben definierten Frequenzbereich, so wird im Verfahrensschritt S6 das Vorliegen einer Kurbelwellenoszillation festgestellt und das Verfahren zur Verbrennungsaussetzererkennung für eine vorgegebene Zeit unterdrückt. Danach wird wieder zum Verfahrensanfang A zurückgegangen.

Es sind auch verschiedene andere Verfahren zur Frequenzermittlung und -überprüfung möglich. Es kann beispielsweise der Abstand zwischen jeweils zwei Umkehrpunkten der Amplitude beispielsweise anhand der Zahl der inzwischen am Meßsensor vorbeigelaufenen Segmente ermittelt werden. Dieser Wert kann dann direkt mit Abstandsgrenzwerten verglichen werden. Denkbar wäre auch, daß bei jedem festgestellten Umkehrpunkt der Schwingungsamplitude ein Zähler auf einen vorgegebenen Wert eingestellt wird und dann beim nachfolgenden Vorbeilaufen der einzelnen Segmente am Sensor dieser Zähler jeweils um eins dekrementiert wird, solange er noch einen Wert größer als Null aufweist. Eine kritische Frequenz, die auf Kurbelwellenoszillationen schließen läßt, wird angenommen, wenn im Abfragezeitpunkt der Zähler einen Wert aufweist, der größer ist als Null. Bei Erreichen des nächsten Umkehrpunktes der Schwingungsamplitude wird dann der Zähler wieder auf den vorgegebenen Wert hochgesetzt.

## Patentansprüche

1. Verfahren zur Erkennung von Oszillationen der Kurbelwelle einer Brennkraftmaschine durch Auswerten von Amplitude und Frequenz einer Schwingung
**dadurch gekennzeichnet,**
- daß wenn sich die Brennkraftmaschine innerhalb eines vorgegebenen Drehzahlbereichs befindet,
- die Amplitude der Kurbelwellenschwingung ermittelt wird,
- und wenn diese Amplitude größer als ein Grenzwert ist,
- die Frequenz der Kurbelwellenschwingung ermittelt wird,
- und wenn diese Frequenz sich innerhalb eines vorgegebenen Frequenzbereichs befindet, eine Oszillation der Kurbelwelle festgestellt wird, und ein Verfahren zur Erkennung von Verbrennungsaussetzern, das die Schwankungen der Kurbelwellengeschwindigkeit auswertet, für ein vorgebbares Zeitintervall unterdrückt wird.

2. Verfahren nach Anspruch 1
**dadurch gekennzeichnet,**
daß die Amplitude der Kurbelwellenschwingung dadurch ermittelt wird, daß über ein vorgebbares Meßintervall die Beträge entweder nur der positiven oder nur der negativen Amplituden aufsummiert werden und dieser Amplitudensummenwert (ASUM) mit einem Amplitudensummengrenzwert (ASUMG) verglichen wird.

3. Verfahren nach Anspruch 2
**dadurch gekennzeichnet,**
daß als Amplitudensummengrenzwert (ASUMG) ein Wert verwendet wird, dem man durch Multiplikation des Grenzwertes der Schwingungsamplituden, bei dessen Überschreiten bei den Verfahren zur Verbrennungsaussetzererkennung ein Verbrennungsaussetzer festgestellt wird, mit einem Faktor, der größer ist als eins, erhält.

4. Verfahren nach Anspruch 1
**dadurch gekennzeichnet,**
daß die Frequenz der Kurbelwellenschwingung dadurch ermittelt wird, daß über ein vorgegebenes Meßintervall die Zahl der Umkehrpunkte des Amplitudenverlaufs der Schwingung ermittelt werden und aus dieser Zahl und der Dauer des Meßintervalls dann die Frequenz berechnet wird.

5. Verfahren nach Anspruch 1
**dadurch gekennzeichnet,**
daß zur Frequenzermittlung der Abstand zwischen zwei Umkehrpunkten des Amplitudenverlaufs der Schwingung ermittelt wird.

6. Verfahren nach Anspruch 1
**dadurch gekennzeichnet,**
daß sich der vorgegebene Drehzahlbereich zwischen 800 U/min und 1800 U/min befindet.

## Claims

1. A procedure for detecting crankshaft oscillations in an internal combustion engine by means of evaluating the amplitude and frequency of a vibration
**characterized in that,**
- when the combustion engine is running within a specified range of revolutions
- the amplitude of the crankshaft vibration is determined,
- and if this amplitude is larger than a specified limit value,
- the frequency of the crankshaft vibration is determined,
- and if this frequency lies within a specified range of frequencies, oscillation of the crankshaft is assumed to exist, and a procedure for the detection of combustion misses which evaluates the variations in crankshaft speed is suppressed for a specifiable time interval.

2. A procedure in accordance with claim 1
**characterized in that,**
the amplitude of the crankshaft vibration is determined by summing the magnitudes of either only the positive or only the negative amplitudes over a specifiable measuring interval and comparing this amplitude sum (ASUM) with an amplitude sum limit (ASUMG).

3. A procedure in accordance with claim 2
**characterized in that,**
a value is chosen for the amplitude limit (ASUMG) which is obtained by multiplying by a factor greater than one the vibration amplitude limit used in the procedures for combustion miss detection where a combustion miss is identified if the latter limit is exceeded.

4. A procedure in accordance with claim 1
**characterized in that,**
the frequency of the crankshaft vibration is determined by determining the number of reversals of the amplitude waveform of the vibration over a specified measurement interval and then calculating the frequency from this number and the duration of the measurement interval.

5. A procedure in accordance with claim 1
**characterized in that,**
the frequency is determined by determining the spacing between two reversals of the amplitude waveform of the vibration.

6. A procedure in accordance with claim 1
**characterized in that,**
the specified range of revolutions per minute is between 800 rpm and 1800 rpm.

## Revendications

1. Procédé pour détecter des oscillations du vilebrequin d'un moteur à combustion interne en interprétant l'amplitude et la fréquence d'une vibration,
caractérisé en ce que,
- quand le moteur à combustion interne se trouve à l'intérieur d'une zone de vitesse de rotation prédéfinie,
- on détermine l'amplitude de la vibration du vilebrequin,
- et quand cette amplitude est plus grande qu'une valeur limite,
- on détermine la fréquence de vibration du vilebrequin,
- et quand cette fréquence se trouve à l'intérieur d'une zone de fréquence prédéfinie, on constate une oscillation du vilebrequin et on supprime, pour un intervalle de temps prédéfini, un procédé, destiné à reconnaître des ratés de combustion, qui interprète les variations de la vitesse du vilebrequin.

2. Procédé suivant la revendication 1, caractérisé en ce que l'amplitude de la vibration du vilebrequin est déterminée en faisant, sur un intervalle de mesure prédéfini, la somme des valeurs soit seulement des amplitudes positives, soit seulement des amplitudes négatives, et la valeur de cette somme d'amplitudes (ASUM) est comparée à une valeur limite de somme d'amplitudes (ASUMG).

3. Procédé suivant la revendication 2, caractérisé en ce que, comme valeur limite de somme d'amplitude (ASUMG), on utilise une valeur que l'on obtient en multipliant par un facteur plus grand que un la valeur limite des amplitudes de vibration et, dans le cas du dépassement de cette valeur limite, lors du procédé de détection des ratés de combustion, on constate que s'est produit un raté de combustion.

4. Procédé suivant la revendication 1, caractérisé en ce que la fréquence de vibration du vilebrequin est déterminée en détectant, sur un intervalle de mesure prédéfini, le nombre des points d'inversion de la courbe d'amplitude de la vibration, et en calculant ensuite la fréquence à partir de ce nombre et de la durée de l'intervalle de mesure.

5. Procédé suivant la revendication 1, caractérisé en ce que, pour déterminer la fréquence, on relève la distance entre deux points d'inversion de la courbe d'amplitude de l'oscillation.

6. Procédé suivant la revendication 1, caractérisé en ce que la zone prédéfinie de vitesse de rotation est située entre 800 t/min et 1800 t/min.
